# EUROPEAN PATENT APPLICATION

(11) **EP 1 757 393 A2**
(43) Date of publication of application: **28.02.2007**
(21) Application number: 06254402.8
(22) Date of filing: 22.08.2006
(51) Int. Cl.: B23B 35/00, B23B 49/00, F16B 1/00

(54) **System and method for precisely matching a predrilling tool with an insert for insertion into a substrate**

(30) Priority: 23.08.2005 US 710387 P
(71) Applicant: Gertner, Paul, Monroe Township, NJ 08831 (US)
(72) Inventor: Gertner, Paul, Monroe Township, NJ 08831 (US)
(74) Representative: Piésold, Alexander James

(57) **Abstract**

A system for precisely matching an insert to a predrilled hole within a designated substrate including a predrill assembly having a first set of parameters and an insert having a second set of parameters precisely matched to the first set of parameters for the designated substrate.

## Description

The present invention is generally directed to the matching of a predrilling tool and an insert such as a screw so that when the predrilling tool forms a predrilled hole in a designated substrate, the insert is precisely matched to fit within the predrilled hole of the designated substrate.

There are numerous instances in which an insert such as a screw must be used to attach two portions of a substrate together (e.g. a top substrate portion and a bottom substrate portion). Quite often, a hole must be drilled into the substrate (often referred to as "predrilling") so that the insert can be effectively inserted therein. As used herein a tool for conducting a predrilling operation is referred to as a predrill or predrill assembly and the hole which is thereby formed is referred to as a predrilled hole.

Predrilling can be particularly complicated when preparing a predrilled hole for an insert such as a screw with a countersinking head style. Countersinking head styles are common for wood screws, but can be used for a number of applications where all or part of the screw head is sunk below the surface of the top substrate portion. Where countersinking is required the predrilled hole must be correctly matched to not only the shank portion of the screw, but also the size and dimensions of the screw head. Up until now there has been no unified system for correctly matching predrill assemblies and inserts for a designated substrate to provide an optimum fit of the insert within the predrilled hole of the designated substrate. The current invention systematizes the matching of the predrill assembly and insert for the designated substrate by recognizing that where predrilling is required, the predrill assembly and the insert for a given application requiring a designated substrate should be viewed together as a fastening system. In prior art systems, the installer typically selects an insert for a certain application and then attempts to find a tool or combination of tools that can create a workable hole, frequently requiring guesswork and/or trial and error and typically less than an optimum match between the insert and the predrilled hole.

One example where predrilling and countersink style screws are often required is in the fabrication of decks in which the substrate is a decking material, typically a hardwood or a composite material (e.g. plastic wood composite). Many portions of the decking material are connected together by decking screws in which the decking material is predrilled to form predrilled holes therein which are adapted to receive a decking screw (typically a countersink decking screw). Predrilling is performed when the substrate is sufficiently hard so that the direct insertion of the screw into the undrilled substrate is problematic and difficult to achieve without damaging the screw and/or the substrate.

Typically, the deck fabricator will start by selecting an insert that will meet various functional requirements of the finished project. In making this selection, the fabricator will also determine whether predrilling is necessary. In the event that predrilling is needed, the fabricator then attempts to find a predrill assembly capable of forming a predrilled hole with the dimensions needed to correctly install the selected insert. It is desirable to have the predrill assembly form a predrilled hole which is precisely matched to the screw so that the best possible fit can be obtained. As used herein the term "precisely matched" shall mean that the predrill assembly and insert are shaped and dimensioned in a manner which takes into account the type of substrate, such that when the insert is operatively placed in the predrilled hole, there is no damage to the predrilled hole or insert and the insert achieves a desired position within the predrilled hole, and that the insert can achieve maximum fastening performance while seated in the predrilled hole.

However, if the insert selected for insertion into the substrate and the predrill assembly are not precisely matched various problems may arise. In very general terms, if the required predrilled hole is too large, the function of the insert can be compromised. As an example, the insert may not hold down the deck lumber over the life of the installation (i.e. failure to achieve maximum functioning performance). If the required predrilled hole is too small, the insert may break during insertion (i.e. damage to the insert), or it may not be possible to fully insert the screw resulting in the head protruding from the substrate surface (i.e. failure to achieve a desired position within the predrilled hole).

Inserts such as screws or other fasteners are used to attach one or more substrate portions or work pieces together. There are a very large variety of insert configurations that have been developed for specific applications. For example, there are screws particularly adapted for attaching metal to metal, metal to wood, wood to metal, wood to wood, etc. There are screws for interior applications and exterior applications. Besides the choice of material, variables affecting the construction of screws include length, diameter, and head design. Despite these variables for any given application, the choices are fairly limited and generally well-known to skilled craftsmen. Thus, while there are thousands of possible types of inserts, there are many applications where most of the installation requires only a small range of insert styles and designs. In particular, this is often the case for cabinetry and deck construction. Thus, a systematic precise matching of inserts with predrill assemblies is highly useful and practical for many construction and assembly projects, when they are precisely matched taking into account the type of substrate material.

There are many instances where predrilling is required in order to properly fasten substrate portions or work pieces together. One such example is the insertion of a particular stainless steel screw (which is a relatively soft material) into a very hardwood, such as mahogany or ipe. For instance, stainless steel may be required in a particular installation for the corrosion resistance it affords. In these instances, the installer selects the appropriate insert and then attempts to identify the predrill assembly that provides the closest match for the insert so that the insert can be properly placed within the predrilled hole. There are instances where the installer has the option of considering various inserts which may or may not require predrilling, and then decide whether predrilling is needed. In these examples, predrilling frequently results in a better installation, either by permitting the use of a superior inserts or achieving better results in the installation. By making predrilling easier, the current invention makes it more feasible for installers to select more desirable fasteners than might otherwise be available for the particular application. Considerations that are characteristic of the selection of a suitable insert for a particular fastening application include:
1. Stainless steel inserts are generally softer than hardened carbon steel. Generally, stainless steel offers superior corrosion resistance compared to carbon steel inserts that have been coated to withstand corrosion. Since stainless steel inserts are made of a softer material, they are more likely to require predrilling.
2. Hardwoods, such as mahogany and ipe, are more likely to require predrilling than softer woods such as yellow pine. Thus, the use of hardwoods, which are generally recognized as a superior product, must be weighed against the effort required to predrill.
3. Wood/plastic composite materials often require predrilling in order to clear the waste material from the predrilled hole. If an attempt was made to place an insert into a substrate of this type without predrilling, unsightly mushrooming of the waste material on the surface around the insert head can result.
4. Thinner gauge inserts are not as strong as heavier gauge inserts, and are therefore more likely to require predrilling. Thinner inserts can be advantageous where it is desirable to minimize the visibility of the insert head surface.

Thus, precisely matching the predrill assembly (e.g. predrill bit) to the insert depends on the insert that will be used and the intended application. The strength of the insert is a first consideration. The ability of any insert to withstand torsional resistance depends on the material and the insert design. The insert material can vary according to hardness. For instance, No. 305 stainless steel (a common grade used in inserts) is unhardened and will not allow the same degree of torque as a hardened steel insert of the same exact dimensions and design. In addition, the design of the insert can itself affect the amount of torque required to drive the insert into the substrate. The diameter or depth of the required predrilled hole may vary according to the strength of the insert. For example, square shaped threads (as opposed to traditional helical threads) present a serrated cutting edge which reduces the required driving torque and can reduce the amount of predrilling required with respect to depth and/or diameter.

A second consideration is the nature of the substrate material. If the substrate material is sufficiently soft, predrilling may not be necessary, subject to the strength of the insert (itself dependent on the insert material, design and dimensions). If predrilling is needed, the depth and diameter of the necessary predrilled hole will be a factor in determining the correctly matched predrilling tool. For instance, if both substrate portions are made of hardwood, then the predrilled hole may need to be the full length of the insert. In many instances where hardwoods are used, they are mounted onto less expensive softwoods. In this event, the depth of the predrilled hold may only have to match the thickness of the hardwood portion of the substrate as the insert can penetrate the softwood portion without predrilling. An aspect of the present invention therefore not only accounts for the structural characteristics of the insert and predrill assembly but also the substrate material to arrive at a precise match.

A third consideration is the diameter of the predrilled hole. There is a generally accepted rule in woodworking that predrilled holes and corresponding diameters of the predrill assembly (e.g. predrill bit) should be sized to correspond to the minor diameter of the shank portion of the insert. The minor diameter is measured inside the flutes of the threaded portion of an insert. There are instances for very hard woods in which the predrilled holes are selected somewhat larger than the minor insert diameter. This is especially apparent when very hard woods are used as the substrate. The basic goal is to make the smallest predrilled hole possible, without instigating failure. In all cases the predrill bit diameter must not exceed the major diameter of the insert or the insert will not hold in place. The major diameter is measured from the outside edges of the insert threads.

The diameter of the unthreaded portion of the insert is a further consideration of the insert diameter. Wood screws have unthreaded portions intended to correspond to the width of the surface substrate material. The threaded portion engages only the underlying substrate. The unthreaded shank portion generally has a diameter between the major and minor diameters. When the predrilled hole depth is limited to the top portion of the substrate, the predrilled hole diameter can be sized to the unthreaded diameter, depending on the stability of the substrate material, the insert head diameter and the ability of the threaded portion to cut through the top portion of the substrate.

A fourth consideration is the insert head design, where the insert head is countersunk into the substrate. There are two variables affecting the countersink portion of a predrilled hole: The width of the predrilled hole and the angle of the insert head, measured from the plane of the underside of the insert head. The width of the predrilled hole should be slightly larger than the diameter of the insert head. The angle of the countersink portion of the predrilled hole needs to be matched to the angle of the insert head.

A fifth consideration is the depth of the countersink hole, often regulated by a stop collar. Stop collars cause the depth of the predrilled hole to be terminated. Depending on the application, it may be desirable for the final countersink insert head to be flush to the surface of the substrate, slightly below the surface or significantly below the surface. For instance, sometimes the insert head is countersunk well below the surface, in order to leave room for a wood plug to be inserted, to hide the head of the insert.

Depending on the nature of the substrate, a stop collar may mar or burnish the surface of the substrate surface. This negative effect can be overcome by providing a free-spinning stop collar and by the use of a contact surface made of rubber or other soft material where the stop collar contacts the substrate. Here again, the precise matching of the predrill assembly and insert takes into account the characteristics of the substrate.

A sixth consideration is the material used for the predrill assembly. Predrill assemblies (e.g. predrill bit) can be made of various materials. Such materials can vary according to how long they maintain sharpness, with longer-lasting materials costing more. Typically, and as an example, cobalt steel costs more and lasts longer than high speed steel. Generally, the longer a predrill bit maintains its edges, the less heat that is generated, and the longer the predrill assembly will last.

The nature of the waste material generated during predrilling is a further consideration. The waste material from the predrilled hole is brought up into the countersink area by the auger motion of the flutes of the predrill assembly. This material can accumulate at the countersink, impeding the countersink and other portions of the predrill assembly including a stop collar if present. The waste material can vary from a fine dust to an aggregated web, the latter requiring a large area to allow the waste to accumulate.

When considering all of the foregoing, it is not surprising that when one selects a predrill assembly for predrilling holes into a substrate, there is typically less than a perfect match when selecting inserts (e.g. screws) which must enter the predrilled hole to fasten the respective portions of a designated substrate. Most commonly, installers who face this problem piece together countersink predrill components for forming a predrilled hole from various assortments on the market, sometimes sold as kits, typically without taking into account all of the variables associated with the substrate material. Generally there are three types of components: predrill bits, countersink predrill bits, and stop collars. Installers need to carefully examine the insert they plan to use and try to find the three components that best match their insert characteristics including dimensions and the optimum predrilled hole size for their particular installation. Then the installer needs to assemble the components, usually involving the use of set-screws, in order to achieve the desired predrilled hole and countersink depth. This often requires trial and error to achieve the correct depth, particularly for the countersink depth. Furthermore, given the complexities of the selection process, installers may not have sufficient technical information, regarding such things as the hardness and other characteristics of the substrate and the torsional strength of the insert, or the precise dimensions of the insert to make the best decision: As an example of the latter, the minor diameter of the insert is often an important variable in selecting a predrill assembly, but this information is rarely available to installers, and not measurable without laboratory instrumentation. Informed installers may resort to holding an insert up to the light, side by side with possible predrill assemblies, to assist in the selection process which is an obviously imprecise method of selection. Finally, when using the commonly available self-assembly kits, the set screws frequently come loose, and the set-up process must often be repeated, and then repeated again when a component fails and the set-up regimen must be repeated.

Failure to provide a perfect fit between an insert and a predrilled hole can result in significant disadvantages. If there is an improper fit such that the insert is smaller than desired for the predrilled hole, a gap can develop between the insert and the boundary of the predrilled hole which can result in the insert and/or insert head not holding within the substrate. In addition, a gap can develop between the insert and the boundary of the predrilled hole which can allow water or other materials to enter into the predrilled hole resulting in corrosion of the insert and degradation of the predrilled hole. In addition, a mismatch between the insert and the predrilled hole is unsightly and detracts from the appearance of the construction.

If the predrilled hole is smaller than the selected insert, the insert can break when inserted or the insert head may protrude from the surface of the substrate, which results in various safety and performance problems.

The present invention is generally directed to a system and method for providing the precise selection and utilization of an insert for a particular substrate in which the system includes a predrilling assembly and an insert precisely matched as defined herein to achieve a desirable fitting of the insert in the predrilled hole formed by the predrill assembly to enable a desirable fastening of two substrates portions together. The system of precisely matching the predrill assembly and the insert takes into account the dimensions of each component, the materials used to construct the components and the type of substrate including the substrate material, its hardness and dimensions. The predrill assembly and the inserts may be sold as a kit or may be sold separately with information provided as part of the system enabling the user to precisely match the predrill assembly and the insert for a designated substrate to achieve the objects of the invention.

In one aspect of the invention, the predrill assembly is the type disclosed in copending U.S. Application Serial No. 11/125,427 which covers a device for precisely incorporating a predrilled hole into a substrate which includes a depth limiting device having a stop collar, a spindle and means operatively associated with the stop collar and the spindle for isolating the rotation of the spindle from the stop collar. Although this is a preferred form of the predrill assembly, it will be understood that the predrill assembly may only include a predrill bit which has been precisely matched with inserts to be inserted within the predrilled hole.

Certain preferred embodiments of the present invention will now be described by way of example only, and with reference to the accompanying drawings in which:
Figure 1A is a side view of an embodiment of a predrill assembly for use in the present invention;
Figure 1B is a cross-sectional view of the predrill assembly of Figure 1A.
Figure 2 is a front view of an embodiment of an insert in the form of a countersink screw which can be precisely matched with a predrill assembly;
Figure 3 is a side elevational view of another embodiment of a predrill assembly for use in the present invention; and
Figure 4 is a chart for demonstrating the precise matching of predrill assemblies and inserts for fastening a designated substrate.

As previously indicated, there are several factors which go into constructing a predrill assembly for predrilling a predrilled hole in a particular type of substrate and for matching an insert (e.g. countersink screw) so that there is optimum fit of the insert within the predrilled hole. Previously, consumers were often left to their own devices to try to match predrill assemblies with inserts although some guidance has been provided by the industry. However, there has been no provision for precisely matching predrill assemblies and inserts for a designated substrate so that the disadvantages associated with prior art approaches are at least substantially reduced if not entirely eliminated.

As used herein the term "designated substrate" shall mean individual, group or class of substrates that share common properties so that a precisely matched predrill assembly and insert will be suitable for performing a fastening operation for the individual, group or class of substrates.

In accordance with the present invention, the predrill assembly is matched with the insert by taking into account the dimensions and type of material for each and various characteristics of the substrate including its composition. To accomplish this, the type of substrate (e.g. decking material), the type of material of the substrate (e.g. hardwood, composite, etc.) are considered when selecting the predrill assembly and the insert. Once the proper size and material of the insert are known, the dimensions of the predrill assembly which forms the predrilled hole (e.g. predrill bit) in the substrate must be precisely determined and matched so that once the predrilled hole is formed, the insert is precisely positioned therein with respect to depth, diameter and head configuration, especially when the insert is a countersink screw.

The predrill assembly and the inserts can be sold as a single package (e.g. a kit). The user can determine what kits are suitable for a particular type of substrate and then purchase that kit which includes both the predrill assembly and inserts. In an alternative embodiment, one can purchase the predrill assembly or the inserts separately and then match the purchased component (e.g. insert) with the other component a (e.g. predrill assembly) by resorting to information appearing on a card or other information providing device at the point of purchase, on the internet or through other product literature such as installation guidelines.

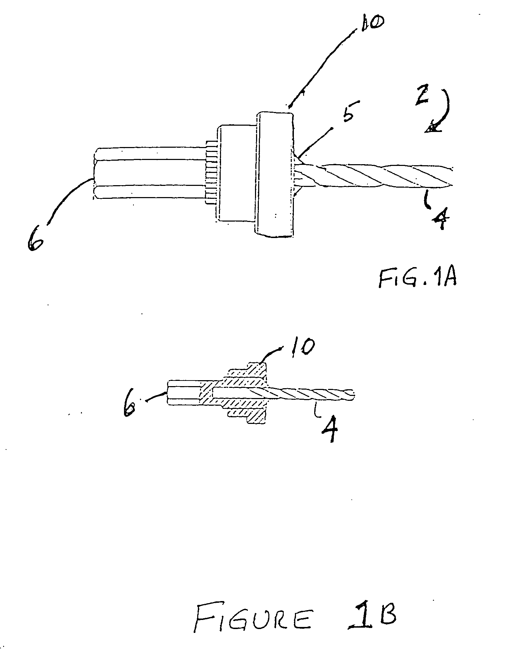

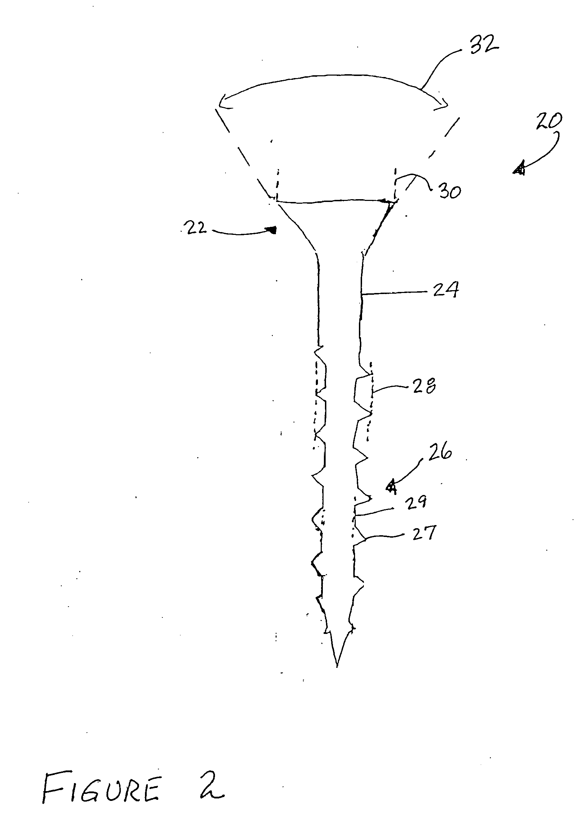

Referring to the drawings and particularly to Figures 1A and 1B, a standard predrill assembly 2 includes a predrill bit 4 having countersink cutting edges 5 and an opposed interlocking portion 6 which is adapted to be inserted into a predrill tool or other boring tool (not shown). The predrill assembly may have a stop collar 10 to assist in limiting the depth of the predrilled hole to a precisely desired dimension. The predrilling tool assembly of the type shown in Figures 1A and 1B will be precisely matched with an insert (e.g. countersink screw) of the type shown in Figure 2 taking into account the designated substrate. Once the predrill assembly is used to form a predrilled hole in the substrate, the matching insert will be precisely seated therein.

As previously indicated, there are several factors which are relevant to the precise matching of an insert to a predrill assembly. With respect to the insert, the relevant factors include strength, hardness, length, the major diameter, the minor diameter, the diameter of the unthreaded shank portion, composition of insert material, the type of threads and the head design including the insert head diameter and the degree of countersink (i.e. the angle of the insert head).

With respect to the predrill assembly, factors which are relevant to achieving a precise match with the insert include, strength, hardness, length, diameter, composition, and the predrill head design including head diameter, the degree of countersink and the depth of the countersink.

Referring to Figure 2, there is shown an insert 20 in the form of a countersink screw.

The insert is comprised of a head portion 22, an unthreaded portion 24 and a threaded portion 26 including threads 27. The threads are provided with a major diameter 28 extending from the outer edge of one helical thread turn to an opposed outer edge, and a minor diameter 29 measured between opposed valleys formed between adjacent threads 27.

The head portion 22 has a diameter 30 and a countersink angle identified by the numeral 32, respectively. Each of the factors identified above for the insert are selected in order to arrive at an insert precisely matched to a predrill tool so that the insert will precisely fit into the predrilled hole created by the precisely matched predrill assembly, taking into account a designated substrate.

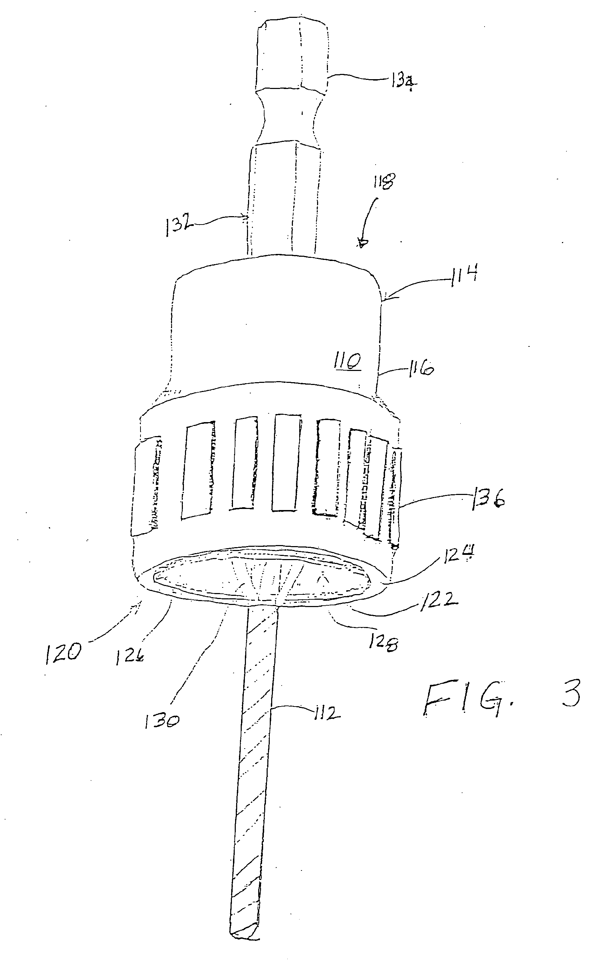

In another embodiment of the invention, the predrill assembly is of the type disclosed in Applicant's copending application Serial No. 11/125,427 which is shown in Figure 3 herein.

With reference to Figure 3, there is shown a predrill assembly identified generally by the reference numeral 110 with a predrilled hole forming device in the form of a predrill bit 112 attached thereto. The predrill assembly 110 is useful for implementation with various predrill hole forming tools including predrilling and boring tools as, for example, electric hand-holdable drills, and drill presses. The predrill bit may be selected from any suitable predrill bits including, but not limited to, twist drill bits, spade drill bits, brad point drill bits, countersink drill bits, hole saw bits, Forstner bits, masonry bits, and corner bits. The predrill bit shown in the drawings and particularly Figure 3 is a countersink predrill bit having countersink cutting edges 130 for forming a countersink hole. The predrill bit 112 may be permanently attached to the predrill assembly via a suitable fastener mechanism as known in the art. The predrill bit may be removably fastened to the predrill tool assembly through a predrill bit replacement assembly to allow replacement of worn or damaged predrill bits.

The predrill assembly 110 shown specifically in Figure 3 includes a stop collar 114 having a substantially cylindrical shell 16 in the form of an inverted cup with a closed proximal end portion 118 and an open distal end portion 120, and a spindle 132 extending axially through the closed proximal end portion 118 of the stop collar 114. The spindle 132 is securely connected to a predrill tool (not shown), such as a drilling machine or auger, via a connector portion 134. The connector portion may be inserted into a gripping device, such as a cullet grip or chuck. The spindle 132 is structurally coupled to the predrill bit 112 at the end opposite from the connector portion 134, and thus transmits rotational power from the predrill tool to the predrill bit 112. The stop collar 114 is adapted to rotate independently from the spindle 132 and the predrill bit 112 as will be further described hereinafter.

The stop collar 114 includes an opening 122 and a workpiece engaging portion 124 extending along the periphery of the opening 122 at the bottom end portion 120. The workpiece engaging portion 124 of the stop collar 114 is adapted to contact the surface of a workpiece during the drilling operation. Because the stop collar 114 rotates essentially independently of the spindle 132 (and predrill bit 112), it will cease rotating upon minimal driving frictional contact with the workpiece and therefore at least substantially avoids marring of the workpiece. As used herein the term "minimal driving frictional contact" shall mean the minimal force or resistance necessary to completely stop rotation of the stop collar while avoiding marring of the workpiece.

It is preferred that the workpiece engaging portion 124 of the stop collar 114 be composed of a material exhibiting a low coefficient of friction such as Teflon or nylon to further minimize the possibility of marring or other damage to the workpiece, while generating sufficient friction to overcome the momentum of the stop collar 114 and cause it to stop rotating upon contact. The stop collar 114 may further include a stop ring 126 composed of a resilient material such as rubber. The stop ring 126 extends along and forms part of the workpiece engaging portion 124 and is the part of the workpiece engaging portion 124 that comes directly in contact with the workpiece. The stop ring 126 provides a cushioning and gripping effect during contact with the workpiece and therefore facilitates the immediate stoppage of rotation of the stop collar with the workpiece.

The cylindrical shell 116 is preferably constructed of a hard but lightweight material typically a plastic or metal, such as a Teflon-polycarbonate blend or nylon. As noted above, the workpiece engaging portion 124 of the shell 116 is preferably composed of a material having a low coefficient of friction, preferably in the range of 0.04 to 0.10, such as nylon, but may also be formed from a teflon polycarbonate blend or any other suitable material.

In the embodiment of Figure 3, the stop collar 114 comprises a cavity 128 defined by the interior of the cylindrical shell 116 which is in communication with the opening 122. During predrilling, debris generated by the interaction of the predrill bit and the workpiece is effectively initially collected and then compacted as more debris accumulates in the cavity 128. The compacted debris forms an agglomerated mass, which may be subsequently removed by the user.

The compacted debris in the cavity 128 may be released by rotating the predrill bit while holding the stop collar 114 to prevent rotation thereof. The turbulence created within the cavity by rotation of the predrill bit 112 is usually sufficient to dislodge the compacted debris. Alternatively, the operator may insert a predrill hole forming device such as a screw or other pointed object into the cavity to dislodge the debris. Accordingly, the stop collar 114 effectively prevents debris from dropping onto the surface of the workpiece, which could result in imprecise drilling depth and/or inadvertent marring or other damage to the workpiece.

The size of the cavity 128 can vary. However, the cavity must be sufficiently large to enable the debris to be collected therein, yet small enough to enable the collected debris to be compacted therein as an agglomerated mass during the hole forming operation.

The cavity is preferably sufficiently large so that debris from at least twenty predrilled holes can be collected and compacted before it is necessary to remove the debris. The size of the cavity may be selected depending on a variety of factors including the type of debris including shape and density, the dimensions of the hole (and therefore the amount of debris per hole) and the like. By way of example and for illustrative purposes only, a depth limiting device for predrilling using a #10 countersink screw having a countersink bore depth of about 13 mm and a predrill bit length measured from the end of the countersink of about 27 mm would employ a stop collar having a cavity with a depth of about 15.6 mm, an inside diameter of about 20 mm and an inside spacing between the countersink bore and the inside cavity wall of about 5.25 mm.

A plurality of ridges 136 may be applied to the exterior portion of the cylindrical shell 16 of the stop collar 114 to provide the user with a gripping surface to stop the stop collar 14 from rotating during drilling. Independently from providing a gripping surface, the ridges 136 can also provide a visual means of determining precisely when the stop collar 114 stops rotating. When the stop collar rotates during the drilling operation, the ridges 36 become blurred to the naked eye (i.e. the individual ridges are not readily discernible) depending on the speed of rotation. When the stop collar 114 engages the workpiece at the minimal driving frictional contact, the stop collar stops rotating and the ridges are no longer blurred but are readily discernible. The observance of the individual ridges 136 is therefore an immediate indication that the stop collar 114 has stopped rotating and the hole has reached the desired depth in the workpiece.

In addition to or as an alternative, all or part of the outside surface of the stop collar 114 can be made more visible to the naked eye such as by using a different color, especially a bright color than the rest of the stop collar. The presence of a more distinct color on the stop collar can also facilitate observance of the precise moment that the stop collar ceases rotation when it achieves minimal driving frictional contact with the workpiece.

Once again, the predrill assembly and the inserts are matched according to the criteria previously described taking into account the characteristics of the designated substrate to provide the user with the ability to provide a precisely seated insert in the substrate.

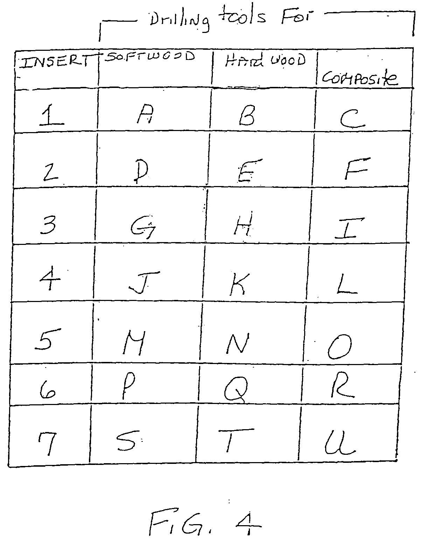

Referring to Figure 4, there is shown a card or other information providing device which can be used by the consumer at the point of retail to purchase either an insert or a predrill assembly and then to precisely match the other component to the one that is purchased. The use of the card provides flexibility to enable the individual components to be sold separately instead of being sold together as a prepackaged kit. As shown in Figure 4, the insert is identified by a number (e.g. No. 1) and the precisely matched predrill assembly is identified by a letter (e.g. A, B or C) depending on the characteristics of the designated substrate. It will be understood that a similar card can be illustrated for the purchase of a particular insert which is matched with a particular predrilling assembly. It will also be understood that other variables may be illustrated on the card as well.

By way of example and referring to Figure 4, an insert designated by the numeral 1 may be matched with a predrill assembly designated by the letter "A" which makes a smaller hole for a softwood substrate (e.g. yellow pine), a predrill assembly designated by the letter "B" which makes a larger hole for a hardwood substrate (e.g. ipe or mahogany), and a predrill assembly "C" having an augmented stop collar cavity especially suited for receiving debris from a composite material.

### EXAMPLE 1

A precisely matched predrill assembly and insert was developed for a fastening operation in which a designated substrate for use as a decking material was comprised of a ¾" thick top portion made out of a high density density tropical hardwood (e.g. ipe) or medium density tropical hardwood (e.g. mahogany) and a subsurface of a softwood (e.g. yellow pine). The desired result of this example is to have a screw head mounted flush with the upper surface of the top portion of the decking material.

An insert was selected with the following characteristics for this application. The insert was a countersink screw of the type shown in Figure 2 with a screw size 10 x 2 ½ (a screw having a length measured from the top surface of the head portion to the opposed end of 63.5 mm (2 ½ inches), a major diameter of 5.2 mm, a minor diameter of 3.2 mm, a threaded portion length of 44.5 mm (1 ¾ inches), a countersink angle of 90° and a head diameter of 9.2 mm) made of a stainless steel. The desired insert was precisely matched with a predrill assembly of the type shown in Figure 3 in which the overall length of the predrill bit was ¾ inch, the diameter of the predrill bit was 3.8 mm, the countersink angle was 90°, and the width of the countersink head was 9.3 mm. The predrill assembly was manufactured to precisely fit the dimensions of the insert to provide a predrill hole of ¾" depth (passing through the hardwood portion but not the softwood portion) capable of precisely seating the insert therein. The predrill bit was made of cobalt steel which is desired for drilling through high density tropical hardwoods.

### EXAMPLES 2-6

The process of Example 1 was repeated to provide a precise match between a desired insert and predrill assembly based on the fastening of a designated substrate in the form of a decking material having characteristics shown in Table 1.

**Table 1**

| EXAMPLE | SURFACE MATERIAL | SUBSURFACE MATERIAL | COUNTERSINK DEPTH | SCREW SIZE | TOOL SPECIFICATIONS COUNTERSINK WIDTH (INCHES) | COUNTERSINK ANGLE (DEGREES) | DRILL BIT DIAMETER (INCHES) | OVERALL HOLE DEPTH (INCHES) | DEPTH OF COUNTERSINK BELOW SURFACE (INCHES) |
|---|---|---|---|---|---|---|---|---|---|
| Ex. 2 | high density hardwood ¾" | high density hardwood | flush | 10 x 2 ½ | 9.3 | 90 | 3.6 | 2 ½ | flush |
| Ex. 3 | medium density hardwood ¾" | medium density hardwood ¾" | flush | 10 x 2 ½ | 9.3 | 90 | 3.2 | 2 ½ | flush |
| Ex. 4 | high density hardwood ¾" | high density hardwood ¾" | pocket for plug | 10 x 2 ½ | 9.8 | 90 | 3.6 | 2 ¾ | ¼ |
| Ex. 5 | medium density hardwood ¾" | Medium density hardwood ¾" | pocket for plug | 10 x 2 ½ | 9.8 | 90 | 3.2 | 2 ¾ | ¼ |
| Ex. 6 | high or medium density hardwood ¾" | softwood | pocket for plug | 10 x 2 ½ | 9.8 | 90 | 3.8 | 1 | ¼ |

## Claims

1. A system for precisely matching an insert to a predrilled hole within a designated substrate comprising:
a predrill assembly for forming a predrilled hole within the designated substrate, said predrill assembly having a first set of parameters; and
an insert for insertion into the predrilled hole formed by the precisely matched predrill assembly, said insert having a second set of parameters for the designated substrate predetermined to match (or to precisely match) the first set of parameters of the predrill assembly to enable the insert to be seated (or to be precisely seated) within the predrilled hole.

2. The system of claim 1 wherein the predrill assembly comprises a depth limiting device having a stop collar, a spindle and means operatively associated with the stop collar and the spindle for isolating the rotation of the spindle from the stop collar.

3. The system of claim 1 wherein the insert is a countersink screw.

4. The system of claim 1 wherein the second set of parameters for the insert is selected from the group consisting of length, major diameter, minor diameter, diameter of unthreaded portion, strength, hardness, composition of insert material, type of threads, and head design.

5. The system of claim 4 wherein the insert is a countersink screw and the head design includes the width of the head and countersink angle.

6. The system of claim 1 wherein the first set of parameters for the predrill assembly is selected from the group consisting of strength, hardness, length, diameter, composition, and predrill head design.

7. The system of claim 6 wherein the predrill head design includes head diameter, degree of countersink and depth of countersink.

8. The system of claim 1 wherein the designated substrate is a decking material.

9. A system for precisely matching an insert to a predrilled hole within a designated substrate comprising:
a predrill assembly for forming a predrilled hole within the designated substrate, said predrill assembly having a first set of parameters; and
an information source containing information enabling the user to identify or locate an insert for insertion into the predrilled hole, said insert having a second set of parameters predetermined to match (or to match precisely) the first set of parameters of the predrill assembly for the designated substrate to enable the insert to be seated (or to be precisely seated) within the predrilled hole.

10. The system of claim 9 wherein the predrill assembly comprises a depth limiting device having a stop collar, a spindle and means operatively associated with the stop collar and the spindle for isolating the rotation of the spindle from the stop collar.

11. The system of claim 9 wherein the insert is a countersink screw.

12. The system of claim 9 wherein the second set of parameters for the insert is selected from the group consisting of length, major diameter, minor diameter, diameter of unthreaded portion, strength, hardness, composition of insert material, type of threads, and head design.

13. The system of claim 10 wherein the insert is a countersink screw and the head design includes the width of the head and countersink angle.

14. The system of claim 9 wherein the first set of parameters for the predrill assembly is selected from the group consisting of strength, hardness, length, diameter, composition, and predrill head design.

15. The system of claim 14 wherein the predrill head design includes head diameter, degree of countersink and depth of countersink.

16. The system of claim 9 wherein the designated substrate is a decking material.

17. A system for precisely matching an insert to a predrilled hole within a designated substrate comprising:
an insert having a first set of parameters; and
an information source containing information enabling the user to identify or locate a predrill assembly having a second set of parameters forming a match (or a precise match) with the first set of parameters of the insert for the designated substrate to enable the insert to be seated (or to be precisely seated) within the predrilled hole.

18. The system of claim 17 wherein the predrill assembly comprises a depth limiting device having a stop collar, a spindle and means operatively associated with the stop collar and the spindle for isolating the rotation of the spindle from the stop collar.

19. The system of claim 17 wherein the insert is a countersink screw.

20. The system of claim 17 wherein the second set of parameters for the insert is selected from the group consisting of length, major diameter, minor diameter, diameter of unthreaded portion, strength, hardness, composition of insert material, type of threads, and head design.

21. The system of claim 20 wherein the insert is a countersink screw and the head design includes the width of the head and countersink angle.

22. The system of claim 17 wherein the first set of parameters for the predrill assembly is selected from the group consisting of strength, hardness, length, diameter, composition, and predrill head design.

23. The system of claim 22 wherein the predrill head design includes head diameter, degree of countersink and depth of countersink.

24. The system of claim 17 wherein the designated substrate is a decking material.

25. A method for precisely matching an insert to a predrilled hole in a designated substrate comprising:
forming a predrilled hole in the designated substrate from a predrill assembly having a first set of parameters; and
inserting an insert having a second set of parameters matched (or precisely matched) with the first set of parameters of the predrill assembly for the designated substrate into the predrilled hole to seat (or to precisely seat) the insert within the predrilled hole.
